(19) Europäisches Patentamt
European Patent Office
Office européen des brevets

(11) Veröffentlichungsnummer : **0 338 399 B1**

# (12) EUROPÄISCHE PATENTSCHRIFT

(45) Veröffentlichungstag der Patentschrift : **13.11.91 Patentblatt 91/46**

(51) Int. Cl.[5] : **B01J 2/28**

(21) Anmeldenummer : **89106482.6**

(22) Anmeldetag : **12.04.89**

## (54) Verfahren zur formgestaltenden Agglomerierung von Feststoffpartikeln (III).

(30) Priorität : **21.04.88 DE 3813393**

(43) Veröffentlichungstag der Anmeldung : **25.10.89 Patentblatt 89/43**

(45) Bekanntmachung des Hinweises auf die Patenterteilung : **13.11.91 Patentblatt 91/46**

(84) Benannte Vertragsstaaten : **DE**

(56) Entgegenhaltungen :
**DE-A- 2 038 153**
**FR-A- 2 215 461**
**GB-A- 1 595 054**
**US-A- 2 850 403**
**US-A- 3 033 782**

(73) Patentinhaber : **Henkel Kommanditgesellschaft auf Aktien**
**Postfach 1100 Henkelstrasse 67**
**W-4000 Düsseldorf 1 (DE)**

(72) Erfinder : **Ritter, Wolfgang, Dr.**
**Am Bandenfeld 74**
**W-5657 Haan (DE)**
Erfinder : **Handwerk, Hans-Peter**
**Boschstrasse 5**
**W-4000 Düsseldorf 13 (DE)**
Erfinder : **Carduck, Franz-Josef, Dr.**
**Landstrasse 18**
**W-5657 Haan (DE)**

EP 0 338 399 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur formgestaltenden Agglomerierung von feinteiligen Feststoffpartikeln unter Mitverwendung von Bindemitteln sowie die Anwendung des neuen Agglomerationsverfahrens zur Herstellung von insbesondere rieselfähigen, gekörnten Massen, die auf den verschiedenartigsten Einsatzgebieten Verwendung finden können. Die Erfindung will insbesondere in einem konzeptionell neuen Ansatz reaktive Bindemittelsysteme einsetzen, die im Laufe des Verfahrens vom löslichen bzw. quellbaren in den unlöslichen Zustand überführt werden.

Gegenstand der älteren Patentanmeldung EP-A-0290984 ist ein solches Verfahren zur formgestaltenden Agglomerierung von feinteiligen, in einer Flüssigphase suspendierten Feststoffpartikeln unter Mitverwendung von Bindemitteln, wobei das Kennzeichen dieser älteren Erfindung darin liegt, daß man als Bindemittel in der Flüssigphase lösliche Polymere einsetzt, die zur Bildung unlöslicher Salze geeignete Säuregruppen aufweisen, welche auch in Form löslicher Salze vorliegen können, daß man weiterhin die Bindemittel, Flüssigphase und zu agglomerierenden Feststoffpartikel zu einer pastös verformbaren Masse aufbereitet und diese Masse formgestaltet mit einer Lösung solcher Kationen vereinigt, die mit den Säuregruppen des polymeren Bindemittels zum unlöslichen Festkörper reagieren. Zur Umwandlung des in der Flüssigphase gelösten Polymeren werden bevorzugt mehrwertige Metallkationen eingesetzt, die ihrerseits ebenfalls in der Flüssigphase löslich sind. Bevorzugte Flüssigphasen sind wäßrige bzw. wäßrig-organische Phasen, wobei bevorzugt mit Wasser in den beiden Reaktionspartnern gearbeitet wird. Nach dem Verfahren der älteren Anmeldung kann insbesondere derart gearbeitet werden, daß man die pastenförmige, das Bindemittel gelöst zusammen mit den unlöslichen dispergierten Feststoffen enthaltende Komponente in ein wäßriges Bad der mehrwertigen Kationen eintropft und darin eine gewisse Zeit bevorzugt unter Bewegung verweilen läßt.

Die vorliegende Erfindung will den Grundgedanken dieser älteren Anmeldung dahingehend variieren, daß von dem bekannten Prinzip der Feuchtagglomeration feinteiliger Feststoffe und den damit im Zusammenhang entwickelten technischen Möglichkeiten Gebrauch gemacht werden kann. Hierdurch erschließen sich eine Vereinfachung und die Erweiterung der Möglichkeiten zur Herstellung solcher polymergebundener, agglomerierter Festkörper.

Gegenstand der vorliegenden Erfindung ist dementsprechend ein Verfahren zur Herstellung von polymergebundenen Feststoffagglomeraten durch formgebendes Agglomerieren der angefeuchteten feinteiligen Feststoffe unter Mitverwendung polymerer Bindemittel beim Agglomerationsprozeß, wobei das Verfahren jetzt dadurch gekennzeichnet ist, daß man als Bindemittel Polymere einsetzt, die in der zum Anfeuchten eingesetzten Flüssigphase quellbar und/oder löslich sind und zur Bildung unlöslicher Salze geeignete Säuregruppen enthalten, welche auch als lösliche Salzgruppen vorliegen können, daß man weiterhin das polymere Bindemittel vor oder während des formgebenden Agglomerierens mit den feinteiligen Feststoffen vereinigt und dort mit Kationen zusammenführt, die in der zum Anfeuchten eingesetzten Flüssigphase löslich sind und mit den Säuregruppen des polymeren Bindemittels zum unlöslichen Polymernetzwerk abreagieren.

Die bekannte Feuchtagglomeration von Feststoffpartikeln wird großtechnisch bekanntlich in besonders einfacher Weise derart durchgeführt, daß das zu agglomerierende Gut mit sehr beschränkten Mengen einer Flüssigphase befeuchtet und damit die Adhäsion der Feststoffpartikel aneinander so verstärkt wird, daß bei geeigneter mechanischer, bzw. physikalischer Behandlung — beispielsweise durch Umrollen bzw. Umwälzen in einem schräg angestellten, tellerförmigen Gerät (Löscheteller) — unmittelbar rieselfähige, praktisch trocken erscheinende Granulatkörner anfallen. Die hier eingestellte Substanzbeschaffenheit ist nicht als formbare Paste zu bezeichnen, wie sie in der Lehre der eingangs genannten älteren Anmeldung hergestellt wird, es wird vielmehr der Zustand einer praktisch trocken erscheinenden Masse nicht verlassen. Diese Zustandsform wird in der Lehre der hier betroffenen Erfindung genutzt, wobei durch die Auswahl des Bindemittels einerseits die Überführung der Bindemittelkomponente in den unlöslichen Zustand sichergestellt ist, andererseits durch Abstimmung des Bindemittels und der zum Agglomerieren eingesetzten Feuchtphase eine Aktivierung des Bindemittels wenigstens durch Anquellen, bevorzugt durch Anlösen bzw. Lösen sichergestellt ist. Erfindungsgemäß sind auch die zur Vernetzung führenden Kationen in der zum Anfeuchten eingesetzten Flüssigphase löslich, so daß die problemlose Abreaktion des Bindemittels mit diesen Kationen sichergestellt ist.

Wie in der Lehre der älteren Anmeldung sind als vernetzende Kationen auch hier mehrwertige Kationen, insbesondere Metallkationen dieser Art bevorzugt, die insbesondere in Form ihrer löslichen Salze in das Verfahren eingebracht werden.

Zur Durchführung des erfindungsgemäßen Verfahrens lassen sich zwei grundsätzliche Typen unterscheiden, die ihrerseits allerdings wiederum in verschiedenen Ausführungsformen verwirklicht werden können.

Nach der ersten Verfahrenstype werden die formgebende Agglomeration der feinteiligen Feststoffe und die verfestigende Polymerbindung in einem einstufigen Verfahren miteinander verbunden. Bei diesem Verfahrenstyp ist es bevorzugt, entweder den zu agglomerierenden feinteiligen Feststoff mit dem löslichen polymeren Bindemittel oder mit den löslichen Salzen der mehrwertigen Kationen zu vereinigen und den zur Ausbildung der Polymerbindung benötigten zweiten Reaktanten gelöst und/oder dispergiert in der zum Anfeuchten eingesetzten Flüssigphase in das Stoffgemisch einzutragen.

Gemäß dieses Verfahrenstyps kann also in einer ersten Ausführungsform der zu agglomerierende feinteilige Feststoff mit dem Bindemittel im Trockenzustand vermischt werden, mit einem solchem Ausgangsgemisch wird dann in üblicher Verfahrensmethodik eine Feuchtagglomeration durchgeführt, wobei zum Anfeuchten eine Flüssigphase eingesetzt wird, in der die vernetzenden Kationen, insbesondere die entsprechenden Metallkationen in Form ihrer löslichen Salze gelöst sind. Umgekehrt kann aber auch das in der zum Anfeuchten eingesetzten Flüssigphase lösliche mehrwertige Metallsalz mit dem feinteiligen Feststoff vorgemischt werden und dann eine Feuchtphase zur Agglomeration eingesetzt werden, in der das polymere Bindemittel gelöst oder wenigstens in gequollenem Zustand feinteilig dispergiert ist.

Grundsätzlich ist es auch möglich, alle drei Komponenten — d.h. den zu agglomerierenden feinteiligen Feststoff, das reaktionsfähige Bindemittel und das mehrwertige Metallsalz im Trockenzustand miteinander zu mischen und dann unter Anfeuchten zu Agglomerieren, wobei auch hier — wie in den anderen zuvor geschilderten Fällen — zusätzlich zum rein physikalischen Haften der Feststoffpartikel aneinander sich die verstärkende Polymerbindung in dem Maße ausbildet, in dem das zunächst lösliche bzw. quellbare Polymere mit den damit reaktionsfähigen mehrwertigen Metallkationen zum unlöslichen Netzwerk abreagiert.

In einem zweiten Verfahrenstyp kann man die formgebende Agglomeration der feinteiligen Feststoffe und die verfestigende Polymerbindung dieser Agglomerate in einem mehrstufigen Verfahren vornehmen, bei dem die Feuchtagglomeration in einer Verfahrensvorstufe stattfindet und getrennt hiervon die verfestigende Polymervernetzung im Agglomerat vorgenommen wird. Gemäß diesem mehrstufigen Verfahrenstyp kann beispielsweise gelöstes bzw. angequollenes polymeres Bindemittel in der Agglomerationsstufe mit der hier erforderlichen beschränkten Flüssigkeitsmenge in die feinteiligen Feststoffe eingetragen und mit diesen zu beispielsweise kornförmigen Agglomeraten vereinigt werden. Ebenso ist es möglich, eine trockene Vormischung der Feststoffe mit den polymeren Bindemitteln einzusetzen und dieses Stoffgemisch zunächst nur mit der Feuchtphase anzunetzen und mit ihrer Hilfe die gewünschte Agglomeratform zu bilden.

In einer getrennten Verfahrensstufe wird dann dieses physikalisch geformte Vorgemisch mit den reaktiven mehrwertigen Kationen, insbesondere mit einer Lösung der mehrwertige Kationen enthaltenden Salze, vereinigt. Auch für diese zweite Verfahrensstufe sind eine Mehrzahl von Ausführungsformen möglich. Lediglich beispielhaft sei das Tränken der vorgeformten Agglomerate mit der Metallsalzlösung angegeben, sei es durch Eintragen der Metallsalzlösung in die trocken erscheinende Granulatmasse oder sei es umgekehrt durch Eintragen der trocken erscheinenden Granulatmasse in ein Bad der gelösten mehrwertigen Metallsalze.

Das erfindungsgemäße Verfahren zeichnet sich letztlich durch die Vorteile der Lehre des genannten älteren Schutzrechtes aus, erweitert aber durch die hier vorgeschlagene Modifikation der Agglomeration im quasi trockenen Zustand die verfahrenstechnischen Möglichkeiten der Praxis beträchtlich.

Für die Auswahl der zu agglomerierenden feinteiligen Feststoffe, der geeigneten Bindemittel, der vernetzenden mehrwertigen Kationen und der Beschaffenheit der Hilfsflüssigkeit gelten sehr weitgehend die Angaben des eingangs genannten älteren Schutzrechtes, die hier der Vollständigkeit halber wiederholt werden.

Zum Anfeuchten bei der Agglomerierung und bevorzugt auch beim gegebenenfalls erforderlichen Imprägnieren der vorgebildeten Agglomerate wird mit wäßrigen bzw. wäßrig/organischen Flüssigphasen gearbeitet, wobei insbesondere Wasser bevorzugt sein kann.

Das zu agglomerierende Gut liegt in der Regel in Form von Pulvern oder als rieselförmiger Feststoff bzw. Feststoffgemisch vor, das in der wäßrigen Phase im wesentlichen unlöslich ist. Beispiele für solche Materialien sind etwa Metallpulver, unlösliche Metallverbindungen wie entsprechende Metalloxide oder Metallsulfide, unlösliche Metallsalze, z.B. metallische Mischoxide und dergleichen. Es kann sich hierbei um Komponenten handeln, die als solche im Agglomerat den Wertstoff für die beabsichtigte Anwendung des Agglomerats besitzen oder aber dort auch erst in situ durch geeignete Reaktion — beispielsweise durch eine Reduktion oder Oxidation — in den aktiven Wertstoff umgewandelt werden können.

Neben oder anstelle solcher anorganischer Komponenten können feinteilige, in der Flüssigphase unlösliche Feststoffe auf Basis von Kohlenstoff bzw. Kohlenstoffverbindungen im erfindungsgemäßen Verfahren agglomeriert werden. Ein besonders wichtiges Beispiel ist hier etwa Aktivkohle, die alleine — beispielsweise zur Herstellung von Aktivkohlebetten — oder zusammen mit metallischen und/oder anorganischen Komponenten der zuvor geschilderten Art Verwendung finden kann. Wichtige Anwendungsgebiete für diese zuletzt beschriebenen Kombinationen finden sich beispielsweise auf dem Gebiet der Katalysatorherstellung, insbesondere bei der vereinfachten Herstellung von gekörnten, rieselfähigen Katalysatoren. Das erfindungsgemäße Verfahren umfaßt aber auch die formgestaltende Agglomerierung von unlöslichen feinteiligen organischen Komponenten beliebiger Art unter den insgesamt milden und schonenden Verfahrensbedingungen des erfindungsgemäßen Verfahrens.

Geeignete wasserlösliche Bindemittel sind Polymerverbindungen natürlichen und/oder synthetischen Ursprungs, die geeignete salzbildende Säuregruppen in der Polymerstruktur enthalten. Säuregruppen dieser Art sind insbesondere Carboxylgruppen und/oder Sulfosäuregruppen, wenn auch die Erfindung hierauf nicht eingeschränkt ist. Beliebige andere, zur Bildung unlöslicher Salze geeignete, funktionell als Anion wirkende Säuregruppierungen sind ebenso geeignet.

Geeignete Bindemittel natürlichen Ursprungs sind lösliche, insbesondere wasserlösliche Polysaccharidderivate mit entsprechenden salzbildenden anionischen Gruppen. Bevorzugte Beispiele sind hier Carboxylmethylcellulose, Carboxymethylstärke und/oder carboxymethylsubstituierte Guarverbindungen. Anstelle der hier speziell genannten Carboxymethylgruppen können andere Carboxyalkylgruppierungen oder solche Polysaccharidderivate eingesetzt werden, die anionisch wirkende Säuregruppen unmittelbar am Polysaccharidgerüst substituiert aufweisen.

Neben oder anstelle solcher Bindemittel natürlichen Ursprungs sind insbesondere synthetische lösliche Polymerbindemittel geeignet. Entsprechend funktionell anionisch reagierende synthetische Polymere sind insbesondere Homo- und/oder Copolymere niederer olefinisch ungesättigter Mono- und/oder Polycarbonsäuren. Geeignete Ausgangsmonomere mit einem Gehalt an Carboxylgruppen sind insbesondere niedere $\alpha,\beta$-ungesättigte Carbonsäuren — hier insbesondere Acrylsäure und Methacrylsäure — bzw. entsprechende niedere olefinisch ungesättigte Dicarbonsäuren — hier insbesondere Maleinsäure bzw. Maleinsäureanhydrid. Weiterhin geeignet sind Acryloyloxypropionsäure, Crotonsäure, Itaconsäure, Itaconsäureanhydrid, Isocrotonsäure, Zimtsäure, Halbester der Maleinsäure und der Fumarsäure, wie z.B. Maleinsäuremonobutylester und Fumarsäure. Durch Auswahl und Menge der Säuregruppierungen enthaltenden Monomerbestandteile und/oder der mit diesen ungesättigten Carbonsäuren copolymerisierten Comonomeren lassen sich die Eigenschaften des polymeren Bindemittels in vielfacher Weise variieren und den erfindungsgemäßen Bedürfnissen anpassen.

Zu nennen ist hier einerseits die hinreichende Wasserlöslichkeit des polymeren Bindemittels in dem wäßrigen Medium, um die homogene Verteilung des Bindemittels über diesen gesamten Reaktionsbestandteil sicherzustellen. Aber auch feindispers verteilte quellbare Bindemittel sind zur Verwirklichung des erfindungsgemäßen Verfahrensprinzips geeignet. Wichtig ist dabei zusätzlich, daß im erfindungsgemäßen Verfahren die hier betroffenen Bindemittel auch in Form ihrer wasserlöslichen Salze, z.B. als Carboxylate eingesetzt werden können. Geeignete wasserlösliche Salze sind insbesondere Alkalisalze, Ammoniumsalze, Aminsalze bzw. Polyaminsalze. So kann beispielsweise in diesem Reaktionsbestandteil die hinreichende Wasserlöslichkeit polymerer Bindemittel der geschilderten Art dadurch sichergestellt werden, daß diese Reaktionskomponente natriumalkalisch eingestellt wird, wobei pH-Werte im Bereich von etwa 8 bis 13 geeignet sein können. Die gewählte Konzentration an anionisch reagierenden Säuregruppen im polymeren Bindemittel hat Einfluß auf die in der Umsetzung mit der kationischen zweiten Reaktionskomponente entstehende Vernetzungsdichte. Andererseits können wiederum besonders temperaturstabile Bindemittel dadurch zum Einsatz kommen, daß Copolymerisate der genannten niederen ungesättigten Mono- und/oder Polycarbonsäuren mit insbesondere niederen $\alpha$-Olefinen verwendet werden.

In einer wichtigen Ausführungsform der Erfindung können polymere Bindemittel eingesetzt werden, die ihre zur Vernetzung geeigneten Reaktivgruppen zunächst in maskierter Form, dabei jedoch derart enthalten, daß beim erfindungsgemäßen Verfahren die reaktionsfähige Gruppe ausgebildet wird und dann in die Reaktion eintreten kann. Ein typisches Beispiel hierfür sind polymere Bindemittel, die niedere Dicarbonsäureanhydride, insbesondere Maleinsäureanhydrid einpolymerisiert enthalten. Die Aufspaltung des Dicarbonsäureanhydridrings wird hier zu einem Teilschritt des Gesamtverfahrens, der erst bei dem Zutritt der zum Anfeuchten eingesetzten wäßrigen Flüssigphase eintritt und dessen Geschwindigkeit durch die gewählten Verfahrensparameter bestimmt werden kann. Auf diese Weise kann auf die Geschwindigkeit des Vernetzungsvorganges am polymeren Bindemittel in gewisser Weise Einfluß genommen werden. Damit kann im erfindungsgemäßen Agglomerationsverfahren auch zur Herstellung von größeren Kugeln bzw. Granulaten eine Ausführungsform eingesetzt werden, die die trockene Vormischung von zu agglomerierendem Feststoff, polymerem Bindemittel und Vernetzer in Form löslicher Salze mehrwertiger Kationen vorsieht. In der Trockenphase ist dieses Mehrstoffgemisch nicht reaktiv. Wird jetzt der Agglomerationsprozeß unter Zusatz beschränkter Feuchtigkeitsmengen eingeleitet, so tritt in üblicher Weise die Zusammenballung des Mehrstoffgemisches zu Granualaten bzw. Kugeln sofort ein, während die Öffnung des Anhydridringes zur reaktionsfähigen Carboxylgruppe und anschließend die Abreaktion der Carboxylgruppen mit den in den Feuchtigkeitsanteilen gelösten mehrwertigen Kationen zeitversetzt stattfindet. Die Verseifung des Anhydridringes kann in an sich bekannter Weise durch Wahl der Temperatur und/oder durch Mitverwendung von alkalisierenden Hilfsstoffen, insbesondere Alkalimetallhydroxiden gesteuert, insbesondere gefördert werden.

Im Rahmen des erfindungsgemäßen Handelns hat es sich als vorteilhaft gezeigt, polymere Bindemittel zu verwenden, die einen Gehalt an Säuregruppen aufweisenden Monomerelementen in einer Menge von wenigstens etwa 5 Mol-%, vorzugsweise von wenigstens etwa 20 Mol-%, besitzen. Besonders geeignete Copolymere enthalten etwa 20 bis 60 Mol-% niedere Carbonsäureeinheiten der genannten Art, die mit niederen α-Olefinen, wie Ethylen und/oder Propylen und/oder mit anderen olefinischen Komponenten wie Methylvinylether copolymerisiert sind.

Geeignete wasserlösliche polymere Bindemittel der genannten Art besitzen beispielsweise mittlere Molekulargewichte (Zahlenmittel Mn) von 500 bis 5 Mio.g/mol, insbesondere im Bereich von etwa 1.000 bis 500.000 g/mol.

Die zur Vernetzung des polymeren Bindemittels mittels Salzbildung eingesetzte zweite Reaktionskomponente sind die bevorzugt wäßrig-löslichen Salze, deren Kationen mt den funktionell anionisch reagierenden Säuregruppierungen des polymeren Bindemittels unter Ausbildung unlöslicher Salze reagieren. Geeignet sind hier praktisch beliebige mehrwertige Metallkationen, wobei aus Stabilitätsgründen und/oder Überlegungen zum beabsichtigten Einsatzzweck der verfestigten Massen, ausgewählten Kationen besondere Bedeutung zukommen kann. Genannt seien in diesem Zusammenhang insbesondere Calcium, Barium, Magnesium, Aluminium und/oder Schwermetalle wie Eisen, Chrom, Zink, Nickel und/oder Cobalt. Als ganz besonders wirksam hat sich das zweiwertige Kupfer herausgestellt, das beispielsweise als wäßrige Sulfat- oder Acetatlösung für zahlreiche Anwendungszwecke zu optimalen Ergebnissen führt.

Die Mengenverhältnisse zwischen zu agglomerierendem unlöslichem Feststoff und polymerem Bindemittel können innerhalb verhältnismäßig weiter Grenzen schwanken, besonders geeignet sind beispielsweise 0,5 bis 20 Gew.-%, vorzugsweise etwa 1 bis 15 Gew.-% des polymeren Bindemittels auf 80 bis 99,5 Gew.-%, insbesondere etwa 85 bis 99 Gew.-% des zu agglomerierenden feinteiligen Feststoffes. Durch die jeweils eingesetzte Menge des polymeren Bindemittels und das Ausmaß seiner Verfestigung durch Umsetzung mit mehrwertigen Kationen kann Einfluß auf die Festigkeit der gebildeten Formkörper genommen werden. Dabei gilt im allgemeinen, daß mit steigenden Mengen des Bindemittels und/oder seines Vernetzungsgrades die Festigkeit der Formkörper zunimmt.

Der Mindestgehalt an vernetzenden Kationen ist durch stöchiometrische Überlegungen in Abstimmung mit dem Gehalt an Säuregruppen aus der anderen Reaktionskomponente festzulegen. Es müssen dabei nicht notwendigerweise stöchiometrisch gleiche Mengenverhältnisse zum Einsatz kommen. Schon die anteilsweise Vernetzung der Säuregruppen im polymeren Bindemittel durch mehrwertige Kationen kann eine hinreichende Verfestigung der Agglomerate ergeben.

In einer besonderen Ausführungsform des erfindungsgemäßen Verfahrens kann mit einem stöchiometrischen Überschuß an vernetzenden Kationen wie folgt gearbeitet werden : Reaktionsbereite Bindemittel enthaltende Feststoffagglomerate werden vorgeformt und dann mit einer bevorzugt wäßrigen Lösung der vernetzenden Salze mehrwertiger Kationen zusammengeführt. Man kann dabei beispielsweise die primär gebildeten Agglomerate in ein Bad geben, das die vernetzenden Kationen gelöst enthält. Dieses Bad kann seinerseits die Fällungskomponenten im Überschuß enthalten, so daß eine Mehrfachverwendung dieses Bades möglich ist.

Als Fällungstemperatur für die Umsetzung der reaktiven Komponenten bietet sich praktisch der gesamte brauchbare Temperaturbereich wäßriger Lösungen an, insbesondere also kann die Fällungstemperatur im Bereich von etwa 0 bis 80°C und bevorzugt im Bereich von etwa 15 bis 40°C liegen. Im allgemeinen wird die Härtung der Bindemittel enthaltenden Agglomerate im Bereich Raumtemperatur erfolgen.

Werden insbesondere wäßrige, die fällenden Metallionen enthaltenden Lösungen als Bad oder in vergleichbarer Form zur Vernetzung der polymeren Bindemittel eingesetzt, so sind Gehalte der fällenden Metallionen in diesen Flüssigphasen von etwa 1 Gew.-% bis zur Sättigung, insbesondere im Bereich von etwa 3 bis 20 Gew.-% bevorzugt.

In einer wichtigen Ausführungsform des erfindungsgemäßen Verfahrens bringt man die formgestaltete Bindemittel und zu agglomerierenden Feststoff enthaltende Reaktionskomponente in einen hinreichenden Überschuß an wäßriger Fällungslösung und läßt gewünschtenfalls die zu verfestigende Masse einige Zeit in dieser Fällungslösung verweilen. Als geeignet haben sich beispielsweise Volumenverhältnisse der zu verfestigenden Masse zur Fällungslösung im Bereich von etwa 1 : 2 bis 1 : 10 Volumenteilen erwiesen. Hier ist sichergestellt, daß die beispielsweise kornförmig oder kugelförmig in die Fällungslösung eingetragene erste Reaktionskomponente voll von einem Überschuß der fällenden Kationen umspült und gewünschtenfalls durchdringend benetzt wird. Die verfestigten und von dem Überschuß der Fällungslösung abgetrennten Formkörper können gewünschtenfalls gewaschen und getrocknet werden.

Für bestimmte Einsatzzwecke kann eine nachfolgende Modifikation der Oberfläche der verfestigten Formkörper zweckmäßig sein. Es hat sich gezeigt, daß je nach den gewählten Verarbeitungsbedingungen Formkörper mit mehr oder weniger glatten bzw. geschlossenen Oberflächen anfallen können. Sind Formkörper entstanden, deren Oberflächen in unerwünschtem Maß geglättet und geschlossen sind, so kann durch einfache mechanische und/oder chemische Behandlung die Oberfläche porig geöffnet und damit der vorherigen Gesamtstruktur des entstandenen Materials angepaßt werden. Geeignet ist beispielsweise das einfache Rollen eines korn- bzw. kugelförmig angefallenen Feststoffgutes in Masse, wobei es nur eines minimalen Abriebes auf der Kornoberfläche bedarf, um den unmittelbaren Zutritt zur porigen Innenstruktur des Korns, bzw. der Kugeln wieder zu eröffnen. Aber auch die Behandlung mit geeigneten Lösungsmitteln führt zu gleichem Ergebnis.

Wird eine Nachreaktion der durch Salzbildung spontan verfestigten Formkörper in der Fällösung gewünscht, so kann das gefällte Gut in der Fällösung beispielsweise für den Zeitraum bis zu einer Stunde, vorzugsweise bis zu 45 Minuten oder weniger belassen werden. Im allgemeinen reicht eine Verweilzeit von 20 bis maximal 30 Minuten, um kornförmiges Material mit einer mittleren Korngröße im Bereich bis etwa 30 mm durchdringend zu härten.

Das gefällte körnige Gut kann beispielsweise 15 Minuten im Fällbad lagern, wobei das Einhalten leicht erhöhter Temperaturen (40 bis 60°C) vorteilhaft sein kann. Anschließend wird die überschüssige Fällösung abgetrennt und das gefällte und erhärtete Material mit Wasser gewaschen und getrocknet. Die Trocknung der Formlinge kann beispielsweise in Umluft bei Temperaturen oberhalb von 100°C erfolgen. Durch kurzfristiges Walzen auf einer Rollbank oder durch kurzfristige Lagerung in einer 0,1%igen Ammoniaklösung können ursprünglich glänzend erscheinende Oberflächen in matt-porös erscheinende Oberflächen umgewandelt werden.

Die Erfindung betrifft damit insbesondere die Anwendung des geschilderten formgestaltenden Agglomerationsverfahrens zur Herstellung von rieselfähigen, gekörnten Massen mit durchschnittlichen Korngrößen im Bereich etwa 1 bis 30 mm und vorzugsweise im Bereich von etwa 2 bis 10 mm auf feinpulvrigen Einsatzmaterialien, deren ursprüngliche Korngröße praktisch beliebig fein sein kann.

Spezielle Beispiele für solche zu agglomerierende feinteilige Feststoffe leiten sich aus dem beabsichtigten Einsatzzweck der erfindungsgemäß hergestellten Formlinge ab. Bedeutung besitzen hier typische Katalysatorkomponenten, beispielsweise unlösliche Verbindungen bzw. feinpulvrige Metalle auf Basis Platin, Palladium, Rhodium, Nickel, in Abwesenheit oder in Gegenwart von Trägern wie Aktivkohle, Kieselgur, aber auch Aluminiumoxid, Calciumcarbonat und dergleichen. Oxydische Katalysatorkomponenten, beispielsweise von der Art des Kupferchromits, die sich durch Unlöslichkeit in Wasser auszeichnen, sind für die Verarbeitung nach dem erfindungsgemäßen Verfahren ebenfalls besonders geeignet. Geeignete mehrwertige Metallsalze für die Fällungslösung sind neben Kupfersulfat beispielsweise Aluminiumchlorid, Calciumchlorid bzw. entsprechende Sulfatsalze, aber auch entsprechende Salzlösungen von 2- bzw. 3-wertigem Eisen, Chrom, Mangan und Barium.

Nach einer bevorzugten Ausführungsform der Erfindung wird das Verfahren zur Agglomerierung von Aktivkohle bzw. Aktivkohle enthaltenden Stoffgemischen zu entsprechenden, beispielsweise Schwermetalle enthaltenden Katalysatoren in Kornform eingesetzt.

Besonders geeignete anionische Polymere für die Verwendung als wasserlösliche Bindemittel sind Ethylen-Maleinsäureanhydrid-Copolymerisate mit einem Gehalt an Maleinsäureanhydrid bis etwa 50 Mol-% und Vinylmethylether-Maleinsäureanhydrid-Copylymerisate vergleichbaren Maleinsäureanhydridgehalts. Eine geeignete polymere Sulfonsäureverbindung ist beispielsweise die Poly-2-acryl-amido-2-methyl-propansulfonsäure.

Die nachfolgenden Beispiele geben typische Arbeitsanweisungen für die Herstellung von granulierten, körnigen bzw. kugelförmigen Massen. Die eingesetzten Reaktanten bzw. das zu granulierende, feinpulvrige, unlösliche Gut sind als Modellsubstanzen zur vergleichenden Darstellung der erfindungsgemäßen Verfahrensprinzipien ausgewählt und zu verstehen.

## Beispiele

### Allgemeine Arbeitsanweisung

Als Arbeitsgeräte werden eingesetzt:

Löscheteller: Tellerdurchmesser 90 cm, der Anstellwinkel (30°-45°) und die Drehzahl (14-22 UpM) sind variabel.

Spritzpistole: Fa. Sata (mit Preßluft betrieben)<br>Sprühdruck 1,5-3 atü<br>Sprühabstand 1-1,5 m<br>Sprühdüsen 1 und 2 mm

Als Modellsubstanzen werden die folgenden Komponenten eingesetzt:

a) Polymer : Vinylmethylether-Maleinsäureanhydrid-Copolymerisat (GAF, Gantrez AN 139)
b) A-Kohle Fa. Lurgi : Typ Brilonit pur
c) Natriumhydroxyd 50%ig : Fa. Merck, Darmstadt
d) Kupfersulfat · 5 $H_2O$ : Fa. Merck, Darmstadt
e) destilliertes Wasser

Die Herstellung der Formlinge erfolgt dabei gemäß den nachfolgenden Arbeitsanweisungen :

a) allgemeines Vorgehen :

Beim beschriebenen Verfahren wird ein Teil der Rohstoffe auf dem Löscheteller vorgelegt und durch Besprühen mit einer Lösung aus Teilen der angegebenen Rohstoffe granuliert. Insofern bei diesem Vorgang das Polymer bereits in Kontakt mit $Cu^{2+}$ tritt, sind die entsprechenden Formlinge direkt vernetzt bzw. gehärtet.

Bei Verfahrensvarianten ohne Verwendung von $Cu^{2+}$ werden die Formlinge, wie sie auf dem Granulierteller anfallen, anschließend in einem getrennten $Cu^{2+}$-Fällbad vernetzt bzw. gehärtet.

Folgende Pulverkombinationen auf dem Löscheteller, Sprühlösungen und Härtungsbäder kamen zum Einsatz :

Pulverkombinationen

a) A-Kohle
b) A-Kohle/Polymer
c) A-Kohle/Polymer/Alkali
d) A-Kohle/Polymer/$CuSO_4$ äquimolar[1)]
e) A-Kohle/Polymer/$CuSO_4$ äquimolar, Alkali

Sprühlösungen

a) Polymer/$H_2O$/Alkali (pH 11,0)
b) $H_2O$/Alkali (pH 11)
c) $H_2O$/$CuSO_4$ aquimolar[1)]
d) $H_2O$

[1)] Pro Mol MAH-Struktureinheit im Polymer wird ein Mol $CuSO_4$ eingesetzt.

Härterlösung

$H_2O$/$CuSO_4$ (10 Gew.-%ig)

b) Details

Die Granuliermasse wird auf dem Löscheteller 15 min bei 20 UpM und einem Anstellwinkel von 45° homogenisiert. Anschließend wird mit der Sprühlösung vernebelnd besprüht. Beim Besprühen ist es vorteilhaft, 50% der zu versprühenden Lösung in 30 min aufzugeben und die restliche Menge in 3-5 minütigen Abständen. Entsprechende Versuche sind in den Tabellen 1-5 mit "in 30 min 50%" gekennzeichnet. Durch diese Arbeitsweise ist gewährleistet, weitgehendst einheitliche Granulate von 3-8 mm Druchmesser bei einer Fahrzeit von 1 h zu erhalten.

Zu schnelles Aufsprühen führt zu unterschiedlichem Granulieren bzw. Agglomerieren von Teilchendurchmessern von 3-25 mm.

Unvernetzte Granulate werden in 5 l 10%iger Kupfersulfatlösung 30 min behandelt, mit Wasser gewaschen, abgesaugt und 24 h bei 125°C im Umlufttrockenschrank getrocknet.

Die schon während des Granulierens vernetzten Granulate werden nach Versuchsende 24 h bei 125°C getrocknet.

In den folgenden Tabellen 1-5 sind die Kombinationen des zu granulierenden Pulvers und der Sprühlösung zusammengestellt.

Formlingeigenschaften wie Aussehen und Festigkeiten, gemessen bei Raumtemperatur, sind ebenfalls aufgelistet.

Beispiele

| | 1 | | 2 | | 3 | |
|---|---|---|---|---|---|---|
| Sprühlösung | | | | | | |
| Zusammensetzung | $H_2O$ | 580 g | $H_2O$ | 500 g | $H_2O$ | 500 g |
| | Alkali | 60 g | Alkali | 40 g | Alkali | 40 g |
| Menge | Polymer | 60 g | | | (in 30 min 50 %) | |
| Granuliermasse | | | | | | |
| Zusammensetzung | A-Kohle | 300 g | A-Kohle | 300 g | A-Kohle | 300 g |
| Menge | | | Polymer | 40 g | Polymer | 40 g |
| Vernetzerbad | $CuSO_4$ | 500 g | $CuSO_4$ | 500 g | $CuSO_4$ | 500 g |
| | $H_2O$ | 4,5 l | $H_2O$ | 4,5 l | $H_2O$ | 4,5 l |
| Aussehen | Kugel-Granulat | | Kugel-Granulat | | Kugel-Granulat | |
| Granulat-Druchmesser | 3-18 mm | | 3- 18 mm | | 3-8 mm | |
| Festigkeit bei Raumtemperatur | 20 - 40 N | | 20 - 40 N | | 10 - 20 N | |

## Beispiele

| | 4 | 5 | 6 |
|---|---|---|---|
| **Sprühlösung** | | | |
| Zusammensetzung | $H_2O$ 640 g | $H_2O$ 630 g | $H_2O$ 460 g |
| | Alkali 30 g | Alkali 20 g | |
| Menge | (in 30 min 50 %) | (in 30 min 50 %) | |
| **Granuliermasse** | | | |
| Zusammensetzung | A-Kohle 300 g | A-Kohle 300 g | A-Kohle 300 g |
| | Polymer 30 g | Polymer 20 g | Polymer 40 g |
| Menge | | | Alkali 40 g |
| **Vernetzerbad** | $CuSO_4$ 500 g | $CuSO_4$ 500 g | $CuSO_4$ 500 g |
| | $H_2O$ 4,5 l | $H_2O$ 4,5 l | $H_2O$ 4,5 l |
| **Aussehen** | Kugel-Granulat | Kugel und Granulat | Kugel und Granulat |
| Granulat-Druchmesser | 3-8 mm | 3- 8 mm | 2-8 mm |
| **Festigkeit bei** Raumtemperatur | 8 N | 6 N | 5 - 7 N |

## Beispiele

| | 7 | 8 | 9 |
|---|---|---|---|
| **Sprühlösung** | | | |
| Zusammensetzung<br>Menge | $H_2O$ 460 g<br>Alkali 20 g<br>Polymer 20 g | $H_2O$ 660 g<br>Alkali 40 g | $H_2O$ 550 g |
| **Granuliermasse** | | | |
| Zusammensetzung<br>Menge | A-Kohle 300 g<br>$CuSO_4$ 31,6 g<br>(äquimolar) | A-Kohle 300 g<br>Polymer 40 g<br>$CuSO_4$ 63,3 g<br>(äquimolar) | A-Kohle 300 g<br>Polymer 40 g<br>Alkali 40 g<br>$CuSO_4$ 63,3 g<br>(äquimolar) |
| **Vernetzerbad** | - | - | - |
| **Aussehen** | Granulat | kein Granulat, Griesform | Kugel und Granulat |
| Granulat-Druchmesser | 2-5 mm | | 2-8 mm |
| **Festigkeit bei** Raumtemperatur | 3 - 5 N | | 5 - 8 N |

## Beispiele

| | 10 | 11 | 12 |
|---|---|---|---|
| **Sprühlösung** | | | |
| Zusammensetzung / Menge | $H_2O$ 700 g | $H_2O$ 700 g | $H_2O$ 550 g<br>$CuSO_4$ 63,3 g<br>(äquimolar) |
| **Granuliermasse** | | | |
| Zusammensetzung / Menge | A-Kohle 300 g<br>Polymer 50 g<br>Alkali 50 g<br>$CuSO_4$ 79,1 g<br>(äquimolar) | A-Kohle 300 g<br>Polymer 60 g<br>Alkali 60 g<br>$CuSO_4$ 94,3 g<br>(äquimolar) | A-Kohle 300 g<br>Polymer 40 g<br>Alkali 40 g |
| **Vernetzerbad** | - | - | - |
| **Aussehen** | Kugel-Granulat | Kugel-Granulat | Kugel-Granulat |
| Granulat-Druchmesser | 2-8 mm | 2-8 mm | 2-10 mm |
| **Festigkeit** bei Raumtemperatur | 18 - 25 N | 16 - 22 N | 2 - 4 N |

| | Beispiele 13 | Beispiele 14 |
|---|---|---|
| **Sprühlösung** | | |
| Zusammensetzung | $H_2O$ 750 g<br>$CuSO_4$ 79,1 g | $H_2O$ 680 g<br>$CuSO_4$ 94,3 g |
| Menge | (äquimolar) | (äquimolar) |
| **Granuliermasse** | | |
| Zusammensetzung | A-Kohle 300 g<br>Polymer 50 g<br>Alkali 50 g | A-Kohle 300 g<br>Polymer 60 g<br>Alkali 60 g |
| Menge | | |
| **Vernetzerbad** | - | - |
| **Aussehen** | Kugel-Granulat | Kugel-Granulat (z. T. stark agglomeriert) |
| Granulat-Druchmesser | 2-10 mm | 2-15 mm |
| **Festigkeit** bei Raumtemperatur | 15 - 25 N | 12 - 20 N |

Härtebestimmung der Kugel-Granulatformlinge

Die Härte der Formkörper wird mit dem Meßgerät für Tabletten-Druckfestigkeit "Modell 4M" der Firma Dr. Schleuniger Productronic AG bestimmt. Gemessen wird bei konstanter und definierter Belastungsgeschwindigkeit von 20 N/sec durch geregelten Antrieb (Meßbereich : 5-300 N).

**Patentansprüche**

1. Verfahren zur Herstellung von polymergebundenen Feststoffagglomeraten durch formgebendes Agglomerieren der angefeuchteten feinteiligen Feststoffe unter Mitverwendung polymerer Bindemittel beim Agglomerationsprozeß, dadurch gekennzeichnet, daß man als Bindemittel Polymere einsetzt, die in der zum Anfeuchten eingesetzten Flüssigphase quellbar und/oder löslich sind und zur Bildung unlöslicher Salze geeignete Säuregruppen enthalten, welche auch als lösliche Salzgruppen vorliegen können, daß man das polymere Bindemittel vor oder während des formgebenden Agglomerierens mit den feinteiligen Feststoffen vereinigt und dort mit Kationen zusammenführt, die in der zum Anfeuchten eingesetzten Flüssigphase löslich sind und mit den Säuregruppen des polymeren Bindemittels zum unlöslichen Polymernetzwerk abreagieren.

2. Verfahren nach Anspruch 1, dadurch gekennzeichnet, daß man mehrwertige Kationen, bevorzugt entsprechende Metallkationen, zur Verfestigung des polymeren Bindemittels einsetzt und diese insbesondere in Form löslicher Salze in das Verfahren einbringt.

3. Verfahren nach Ansprüchen 1 und 2, dadurch gekennzeichnet, daß man die formgebende Agglomeration und die verfestigende Polymerbindung in einem einstufigen Verfahren miteinander verbindet und dabei bevorzugt den zu agglomerierenden feinteiligen Feststoff entweder mit dem löslichen polymeren Bindemittel oder mit den löslichen Salzen der mehrwertigen Kationen vereinigt und den zur Ausbildung der Polymerbindung benötigten Reaktanten gelöst und/oder dispergiert in der zum Anfeuchten eingesetzten Flüssigphase in das Stoffgemisch einträgt.

4. Verfahren nach Ansprüchen 1 und 2, dadurch gekennzeichnet, daß man die formgebende Agglomeration und die verfestigende Polymerbindung in einem mehrstufigen Verfahren vornimmt, bei dem die Feuchtagglomeration in einer Verfahrensvorstufe und getrennt hiervon die Vernetzung im Agglomerat vorgenommen werden.

5. Verfahren nach Anspruch 4, dadurch gekennzeichnet, daß man beim mehrstufigen Verfahren in der Agglomerationsstufe in die feinteiligen Feststoffe gelöstes polymeres Bindemittel einträgt oder eine Vormischung der Feststoffe mit dem polymeren Bindemittel einsetzt und die ausgebildeten Agglomerate mit einer Lösung der mehrwertige Kationen enthaltenden Salze tränkt.

6. Verfahren nach Ansprüchen 1 bis 5, dadurch gekennzeichnet, daß man zum Anfeuchten bei der Agglomerierung und bevorzugt auch beim gegebenenfalls erforderlichen Imprägnieren der vorgebildeten Agglomerate mit wäßrigen bzw. wäßrig/organischen Flüssigphasen, insbesondere mit Wasser, arbeitet.

7. Verfahren nach Ansprüchen 1 bis 6, dadurch gekennzeichnet, daß man als Bindemittel Polymerverbindungen natürlichen und/oder synthetischen Ursprungs einsetzt, die als salzbildende Gruppen insbesondere Carboxylgruppen und/oder Sulfonsäuregruppen enthalten.

8. Verfahren nach Ansprüchen 1 bis 7, dadurch gekennzeichnet, daß als Bindemittel natürlichen Ursprungs lösliche, insbesondere wasserlösliche Polysaccharidderivate mit salzbildenden Gruppen, bevorzugt von der Art der Carboxymethylcellulose, Carboxymethylstärke und/oder carboxymethylsubstituierten Guarverbindungen eingesetzt werden.

9. Verfahren nach Ansprüchen 1 bis 7, dadurch gekennzeichnet, daß man als synthetische Bindemittel lösliche, insbesondere wasserlösliche Polymere einsetzt, die bevorzugt Carboxyl — bzw. Carboxylatgruppen enthalten und die insbesondere Homo- und/oder Copolymere niederer olefinisch ungesättigter Mono- und/oder Dicarbonsäuren sind, wobei in einer bevorzugten Ausführungsform auch Dicarbonsäureanhydrid-Gruppierungen enthaltende Bindemittel in das Verfahren eingeführt werden können.

10. Verfahren nach Ansprüchen 1 bis 9, dadurch gekennzeichnet, daß man die Temperaturstabilität des polymeren Bindemittels dem beabsichtigten Einsatzzweck der formgestalteten Agglomerate anpaßt, wobei als besonders temperaturstabile Bindemittel Copolymerisate niederer α-Olefine mit niederen α,β-ungesättigten Carbonsäuren bevorzugt sein können.

11. Verfahren nach Ansprüchen 1 bis 10, dadurch gekennzeichnet, daß man die polymeren Bindemittel wenigstens anteilsweise in Form ihrer wasserlöslichen Alkali-, Ammonium- und/oder Amin- bzw. Polyaminsalze einsetzt.

12. Verfahren nach Ansprüchen 1 bis 11, dadurch gekennzeichnet, daß man zur Umwandlung des gelösten und/oder gequollenen polymeren Bindemittels in die unlösliche Form durch Salzbildung mehrwertige Metallkationen, insbesondere Calcium, Barium, Aluminium und/oder Schwermetalle wie Eisen, Chrom, Zink, Nickel, Cobalt und/oder insbesondere Kupfer einsetzt.

13. Verfahren nach Ansprüchen 1 bis 12, dadurch gekennzeichnet, daß man als zu agglomerierendes unlösliches Gut pulver-bis rieselförmige Feststoffe bzw. Feststoffgemische, z.B. auf Basis Metallpulver, unlösliche Metallverbindungen wie Metalloxide, -sulfide, unlösliche Metallsalze und/oder Aktivkohle einsetzt.

14. Verfahren nach Ansprüchen 1 bis 13, dadurch gekennzeichnet, daß wasserlösliche polymere Bindemittel mit mittleren Molekulargewichten (Mn) von etwa 500 bis 5 Mio., insbesondere von etwa 1000 bis 500000 eingesetzt werden.

15. Verfahren nach Ansprüchen 1 bis 14, dadurch gekennzeichnet, daß polymere Bindemittel mit einem Gehalt an Säuregruppen aufweisenden Monomer-Elementen von wenigstens etwa 5 Mol-%, vorzugsweise wenigstens von etwa 20 Mol-% eingesetzt werden, wobei als temperaturstabile Copolymere insbesondere etwa 20 bis 60 Mol-% niedere Carbonsäure- bzw. Dicarbonsäure-Einheiten, copolymerisiert mit Ethylen, Propylen und/oder Methylvinylether, vorliegen.

16. Verfahren nach Ansprüchen 1 bis 15, dadurch gekennzeichnet, daß etwa 0,5 bis 20 Gew.-% des polymeren Bindemittels auf 80 bis 99,5 Gew.-% der zu agglomerierenden Feststoffe eingesetzt werden, wobei bevorzugte Mengenverhältnisse des Bindemittels im Bereich von 1 bis 15 Gew.-% auf 85 bis 99 Gew.-% des zu agglomerierenden Feststoffes liegen.

17. Verfahren nach Ansprüchen 1 bis 16, dadurch gekennzeichnet, daß wäßrige, die fällenden Metallionen enthaltenden Lösungen mit Gehalten der fällenden Metallionen von etwa 1 Gew.-% bis zur Sättigung, insbesondere im Bereich von etwa 3 bis 20 Gew.-% verwendet werden.

18. Verfahren nach Ansprüchen 1 bis 17, dadurch gekennzeichnet, daß man die Fällung bei Temperaturen von etwa 0 bis 80°C und insbesondere im Temperaturbereich von etwa 15 bis 40°C durchführt.

19. Verfahren nach Ansprüchen 1 bis 18, dadurch gekennzeichnet, daß man das gefällte und verfestigte Gut in Kontakt mit der fällenden Metallionen enthaltenden Lösung für einen beschränkten Zeitraum von z.B. bis zu etwa 45 min nachreagieren läßt und dann bevorzugt vor einer weiteren Bearbeitung auswäscht und gewünschtenfalls trocknet.

20. Verfahren nach Ansprüchen 1 bis 19, dadurch gekennzeichnet, daß man die Oberfläche des formgestaltet verfestigten Gutes durch mechanische und/oder chemische Behandlung modifiziert, insbesondere aufrauht.

21. Verfahren nach Ansprüchen 1 bis 20, dadurch gekennzeichnet, daß man das Korn — bzw. kugelförmig verfestigte Gut — in Masse kurzfristig rollt.

22. Anwendung des formgestaltenden Agglomerationsverfahrens nach Ansprüchen 1 bis 21 zur Herstellung von gekörnten Massen mit durchschnittlichen Korngrößen im Bereich von etwa 0,5 bis 30 mm, insbesondere 1 bis 20 mm und vorzugsweise etwa 2 bis 10 mm aus einem feinpulvrigen Einsatzmaterial.

23. Anwendung nach Anspruch 22, dadurch gekennzeichnet, daß das Verfahren zur Agglomerierung von Aktivkohle bzw. Aktivkohle enthaltenden Stoffgemischen zu entsprechenden, beispielsweise Schwermetalle enthaltenden Katalysatoren in Kornform eingesetzt wird.

## Claims

1. A process for the production of polymer-bound solid agglomerates by shaping agglomeration of the moistened finely divided solids using polymeric binders in the agglomeration process, characterized in that the binders used are polymers which are swellable and/or soluble in the liquid phase used for moistening and which contain acid groups suitable for forming insoluble salts, which may even be present as soluble salt groups, and in that the polymeric binder is combined with the finely divided solids before or during the shaping agglomeration and is then combined there with cations which are soluble in the liquid phase used for moistening and which react off with the acid groups of the polymeric binder to form the insoluble polymer network.

2. A process as claimed in claim 1, characterized in that polyvalent cations, preferably corresponding metal cations, are used to solidify the polymeric binder and are introduced into the process in particular in the form of soluble salts.

3. A process as claimed in claims 1 and 2, characterized in that the shaping agglomeration and solidification of the polymeric binding are combined with one another in a single-step process in which the finely divided solid to be agglomerated is combined either with the soluble polymeric binder or with the soluble salts of the polyvalent cations and the second reactant required to form the polymeric binder is introduced into the mixture in solution and/or dispersion in the liquid phase used for moistening.

4. A process as claimed in claims 1 and 2, characterized in that the shaping agglomeration and solidification of the polymeric binder of the agglomerates is carried out in a multistep process, in which the moist agglomeration takes place in a first step and the crosslinking is carried out separately in the agglomerate.

5. A process as claimed in claim 4, characterized in that, in the multistep process, dissolved polymeric binder is introduced into the finely divided solids in the agglomeration step or a premix of the solids with the polymer binder is used and the agglomerates formed are impregnated with a solution of the salt containing polyvalent cations.

6. A process as claimed in claims 1 to 5, characterized in that aqueous or aqueous-organic liquid phases, particularly water, are used for moistening in the agglomeration step and, preferably, for the impregnation — where necessary — of the preformed agglomerates.

7. A process as claimed in claims 1 to 6, characterized in that polymeric compounds of natural and/or synthetic origin which contain carboxyl groups and/or sulfonic acid groups in particular as salt-forming groups, are used as the binder.

8. A process as claimed in claims 1 to 7, characterized in that soluble, more especially water-soluble, polysaccharide derivatives containing salt-forming groups, preferably of the carboxymethyl cellulose type, the carboxymethyl starch type and/or the carboxymethyl-substituted guar compound type, are used as binders of natural origin.

9. A process as claimed in claims 1 to 7, characterized in that soluble, more especially water-soluble, polymers which preferably contain carboxyl or carboxylate groups and which are, in particular, homo- and/or copolymers of lower olefinically unsaturated mono- and/or dicarboxylic acids are used as synthetic binders, binders containing dicarboxylic anhydride groups also being introduced into the process in one preferred embodiment.

10. A process as claimed in claims 1 to 9, characterized in that the thermal stability of the polymeric binder is adapted to the intended application of the shaped agglomerates, copolymers of lower $\alpha$-olefins with lower $\alpha,\beta$-unsaturated carboxylic acids being preferably used as particularly heat-stable binders.

11. A process as claimed in claims 1 to 10, characterized in that the polymeric binders are used at least partly in the form of their water-soluble alkali, ammonium and/or amine or polyamine salts.

12. A process as claimed in claims 1 to 11, characterized in that polyvalent metal cations, particularly calcium, barium, aluminium, and/or heavy metals, such as iron, chromium, zinc, nickel, cobalt and/or in particular copper are used for converting the dissolved and/or swollen polymeric binder into the insoluble form by salt formation.

13. A process as claimed in claims 1 to 12, characterized in that powder-form to free-flowing solids or solid mixtures, for example based on metal powders, insoluble metal compounds, such as metal oxides, sulfides, insoluble metal salts and/or active carbon, are used as the insoluble material to be agglomerated.

14. A process as claimed in claims 1 to 13, characterized in that water-soluble polymeric binders having average molecular weights (Mn) of from about 500 to 5,000,000 and more especially in the range from about 1,000 to 500,000 are used.

15. A process as claimed in claims 1 to 14, characterized in that polymeric binders containing at least about 5 mol-% and preferably at least about 20 mol-% monomer elements containing acid groups are used, the heat-stable copolymers present being, in particular, lower carboxylic or dicarboxylic acid units copolymerized with ethylene, propylene and/or methyl vinyl ether in a proportion of about 20 to 60 mol-%.

16. A process as claimed in claims 1 to 15, characterized in that the polymeric binder is used in a quantity of from about 0.5 to 20% by weight to 80 to 99.5% by weight of the solids to be agglomerated, preferred quantitative ratios being 1 to 15% by weight of the binder to 85 to 99% by weight of the solid to be agglomerated.

17. A process as claimed in claims 1 to 16, characterized in that aqueous solutions containing the precipitating metal ions in concentrations of from about 1% by weight to saturation and preferably in the range from about 3 to 20% by weight are used.

18. A process as claimed in claims 1 to 17, characterized in that the precipitation is carried out at temperatures of from about 0 to 80°C and more especially at temperatures in the range from about 15 to 40°C.

19. A process as claimed in claims 1 to 18, characterized in that the precipitated and solidified material is left to continue reacting in contact with the solution containing precipitating metal ions for a limited period of, for example, up to about 45 minutes and, preferably, is then washed and, if desired, dried before further processing.

20. A process as claimed in claims 1 to 19, characterized in that the surface of the shaped and solidified agglomerate is modified, in particular, roughened by mechnical and/or chemical treatment.

21. A process as claimed in claims 1 to 20, characterized in that the granular or bead-like solidified material is briefly rolled in bulk.

22. The use of the shaping agglomeration process claimed in claims 1 to 21 for the production of granular materials having average grain sizes in the range from about 0.5 to 30 mm, preferably in the range from 1 to 20 mm and more preferably in the range from about 2 to 10 mm from a finely powdered starting material.

23. The use claimed in claim 22, characterized in that the process is used for the agglomeration of active carbon or mixtures containing active carbon to corresponding catalysts, for example containing heavy metals, in grain form.

## Revendications

1. Procédé pour la préparation d'agglomérats de matières solides à liaison polymère par agglomération de façonnement des matières solides finement divisées ayant subi une humidification, avec utilisation conjointe de liants polymères au cours du processus d'agglomération, **caractérisé en ce que**, comme liants, on met en oeuvre des polymères qui sont gonflables et/ou solubles dans la phase liquide mise en oeuvre pour l'humidification et qui, pour la formation de sels insolubles, contiennent des groupes acides appropriés qui peuvent également être présents sous forme de groupes de sels solubles, en ce qu'on réunit le liant polymère aux matières solides finement divisées, avant ou pendant l'agglomération de façonnement, et on le met en contact avec des cations qui solubles dans la phase liquide mise en oeuvre pour l'humidification et qui réagissent avec les groupes acides du liant polymère pour donner lieu à un réseau polymère insoluble.

2. Procédé selon la revendication 1, **caractérisé en ce qu'**on met en oeuvre des cations polyvalents, de préférence des cations métalliques correspondants, pour la consolidation du liant polymère, ces cations étant mis en oeuvre dans la procédé, en particulier, sous forme de sels solubles.

3. Procédé selon les revendications 1 et 2, **caractérisé en ce qu'**on combine mutuellement en un procédé en une seule étape, l'agglomération de façonnement et la liaison polymère consolidante et, en l'occurence, de préférence, on réunit la matière solide finement divisée à agglomérer, soit avec le liant polymère soluble, soit avec les sels solubles des cations polyvalents et on incorpore le réactif requis pour la mise en oeuvre de la liaison polymère, dans le mélange de matières, le réactif étant dissous et/ou dispersé dans la phase liquide mise en oeuvre pour l'humidification.

4. Procédé selon les revendications 1 et 2, **caractérisé en qu'**on procède à l'agglomération de façonnement et à la liaison polymère consolidante en un procédé à plusieurs étapes, par lequel on procède à l'agglomération à l'état humide au cours d'une étape opératoire de préparation et, séparément par rapport à cette dernière, on procède à la réticulation au sein de l'agglomérat.

5. Procède selon la revendication 4, **caractérisé en ce que**, au cours du procédé à plusieurs étapes, lors de l'étape d'agglomération, on introduit, dans les matières finement divisées, un liant polymère dissous ou bien on met en oeuvre un prémélange des matières solides avec le liant polymère et on imprègne les agglomérats réalisés, à l'aide d'une solution des sels contenant des cations polyvalents.

6. Procédé selon les revendications 1 à 5, **caractérisé en ce que**, pour l'humidification lors de l'agglomération et, de préférence, également lors de l'imprégnation éventuellement requise des agglomérats préformés, on travaille avec des phases liquides aqueuses ou aqueuses/organiques, en particulier avec de l'eau.

7. Procédé selon les revendications 1 à 6, **caractérisé en ce que**, comme liants, on mets en oeuvre des composés polymères d'origine naturelle et/ou synthétique, qui contiennent, comme groupes salifiables, en particulier des groupes carboxyle et/ou des groupes d'acides sulfoniques.

8. Procédé selon les revendications 1 à 7, **caractérisé en ce que**, comme liants, on met en oeuvre des dérivés solubles de polysaccharide, en particulier hydrosolubles, contenant des groupes salifiables, de préférence, du type de la carboxyméthylcellulose, des amidons carboxyméthylés et/ou des composés de guar carboxyméthylés.

9. Procédé selon les revendications 1 à 7, **caractérisé en ce qu'**on met en oeuvre, comme liants synthétiques, des polymères solubles, en particulier hydrosolubles, qui contiennent, de préférence, des groupes carboxyle ou carboxylate et qui sont constitués, en particulier, d'homo- et/ou de copolymères d'acides inférieurs mono- et/ou dicarboxyliques à insaturation oléfinique, des liants contenant des groupements d'anhydrides dicarboxyliques pouvant également être introduits dans le procédé, dans une forme de réalisation préférée.

10. Procédé selon les revendications 1 à 9, **caractérisé en ce qu'**on adapte la stabilité thermique du liant polymère à l'objet d'utilisation recherché pour les agglomérats façonnés, des copolymères d'$\alpha$-oléfines inférieures avec des acides carboxyliques inférieurs $\alpha,\beta$-insaturés pouvant être utilisés, de préférence, comme liants particulièrement stables thermiquement.

11. Procédé selon les revendications 1 à 10, **caractérisé en ce qu'**on met en oeuvre les liants polymères, au moins partiellement, sous forme de leurs sels hydrosolubles de métaux alcalins, d'ammonium et/ou d'amines ou de polyamines.

12. Procédé selon les revendications 1 à 11, **caractérisé en ce qu'**on met en oeuvre, pour la transformation du liant polymère dissous et/ou gonflé dans la forme insoluble par salification, des cations métalliques polyvalents, en particulier le calcium, le baryum, l'aluminium et/ou des métaux lourds tels que le fer, le chrome, le zinc, le nickel, le cobalt et/ou, en particulier, le cuivre.

13. Procédé selon les revendications 1 à 12 **caractérisé en ce qu'**on met en oeuvre, comme matière insoluble à agglomérer, des matières solides ou des mélanges de matières solides sous forme pulvérulente à ruisselante, par exemple, à base de poudres métalliques, des composés métalliques insolubles tels que des oxydes métalliques, des sulfures métalliques, des sels métalliques insolubles et/ou du charbon actif.

14. Procédé selon les revendications 1 à 13, **caractérisé en ce qu'**on met en oeuvre des liants polymères hydrosolubles ayant des poids moléculaires moyens (poids moléculaire en nombre) d'environ 500 à 5 millions, en particulier d'environ 1000 à 500000.

15. Procédé selon les revendications 1 à 14, **caractérisé en ce qu'**on met en oeuvre des liants polymères ayant une teneur en éléments monomères présentant des groupes acides d'au moins environ 5 moles %, de préférence d'au moins environ 20 moles %, dans lesquels, comme copolymères thermiquement stables, sont présents, en particulier d'environ 20 à 60 moles % d'unités d'acides carboxyliques ou dicarboxyliques inférieurs, copolymérisées avec de l'éthylène, du propylène et/ou de l'éther méthylvinylique.

16. Procédé selon les revendications 1 à 15, **caractérisé en ce qu'**on met en oeuvre d'environ 0,5 à 20% en poids du liant polymère pour 80 à 99,5% en poids des matières solides à agglomérer, des rapports pondéraux préférés du liant se situant dans le domaine de 1 à 15% en poids, pour 85 à 99% en poids de la matière solide à agglomérer.

17. Procédé selon les revendications 1 à 16, **caractérisé en ce qu'**on utilise des solutions aqueuses qui contiennent des ions métalliques précipitants, avec des teneurs en ions métalliques précipitants allants d'environ 1% en poids jusqu'à saturation, en particulier, dans le domaine d'environ 3 à 20% en poids.

18. Procédé selon les revendications 1 à 17, **caractérisé en ce qu'**on effectue la précipitation à des températures d'environ 0 à 80°C et, en particulier, dans un domaine de température d'environ 15 à 40°C.

19. Procédé selon les revendications 1 à 18, **caractérisé en ce qu'**on laisse réagir ultérieurement la matière précipitée et et consolidée, en contact avec la solution contenant les ions métalliques précipitants, pendant un intervalle de temps limité allant, par exemple, jusqu'à environ 45 minutes ; ensuite, de préférence, on lave avant d'entreprendre un traitement ultérieur et on sèche éventuellement.

20. Procédé selon les revendications 1 à 19, **caractérisé en ce qu'**on modifie la surface de la matière consolidée et façonnée par un traitement mécanique et/ou chimique, en particulier, on la rend rugueuse.

21. Procédé selon les revendications 1 à 20, **caractérisé en ce qu'**on roule brièvement les grains — ou la matière consolidée en forme sphérique — pour obtenir une masse.

22. Utilisation du procédé d'agglomération de façonnement selon les revendications 1 à 21, pour la préparation de masses granuleuses ayant des granulométries moyennes dans le domaine d'environ 0,5 à 30 mm, en particulier de 1 à 20 mm, de préférence d'environ 2 à 10 mm, à partir d'une matière d'introduction à grains fins.

23. Utilisation selon la revendication 22, **caractérisée en ce qu'**on met en oeuvre le procédé pour l'agglomération de charbon actif ou de mélanges de matières contenant du charbon actif, en catalyseurs correspondants contenant, par exemple, des métaux lourds, sous une forme granuleuse.